# EUROPEAN PATENT APPLICATION

(11) **EP 1 577 190 A1**
(43) Date of publication of application: **21.09.2005**
(21) Application number: 05005455.0
(22) Date of filing: 14.03.2005
(51) Int. Cl.: B62B 9/04, B32B 27/06, B62D 29/04, B62D 65/00

(54) **Self-stick stiffening structural element for body-works in motor vehicles and method of application**

(30) Priority: 17.03.2004 IT TO20040178
(71) Applicant: FIAT AUTO S.p.A., 10135 Torino (IT)
(72) Inventor: Zeccardo, Samuelle, Fiat Auto S.p.A, 10135 Torino (IT)
(74) Representative: Di Francesco, Gianni

(57) **Abstract**

Description of a layered stiffening element for body-works or mobile parts of motor-vehicles, characterised in that it consists of a layer of carbon fabric (3) placed between two layers of thermosetting resin (2, 5), the three layers being assembled by means of hot pressing.

## Description

The present invention refers to a self-stick stiffening structural element for body-works in motor vehicles and to the method of application on the body-work. It is an object of motor-vehicles manufacturers to guarantee that the driver and the passengers of motor-vehicles are completely safe.

In order to make motor-vehicles satisfy European and worldwide market requirements, the new motor-vehicles are designed in order to guarantee the best possible performance under any conditions. Passive security refers to all the solutions and features of the devices that help preventing or reducing the consequences that passengers could suffer because of a car accident. The body-work and the mobile components of the motor-vehicle are therefore designed and developed in order to give maximum security to people in the passenger compartment by means of controlled deformation intended to take up the energy produced by the impact without affecting the vital spaces inside the motor vehicle.

These motor-vehicles implement a body-work of varying stiffness and presenting reinforcements of the surviving cell intend to resist to the front impact tests in order to guarantee that the passenger compartment is stiff enough and non-deformable so that the consequences of the impact are reduced to the minimum.

Among the modifications implemented on the body-work in order to achieve said objects, there are reinforcements on the struts, which deform themselves in a predefined way taking up and distributing the impact thanks to the front connection cross-piece. Besides, reinforcements are placed on the longitudinal members, on the side posts and under the centre. Presently, said reinforcements are made of thermosetting resin manually applied during sheet metal working. When the bodyworks pass into the ovens of the painting circuit, the resins become stiff and vulcanised so that they adhere to the surfaces of the metal sheets and make the body-work become locally stiffer.

However, these reinforcements get fissured in time so that the body-work produces noise and loses stiffness in the part affected by this phenomenon.

It is an object of the present invention to provide structural stiffness that lasts in time and overcomes the aforementioned problems.

Said object is achieved by means of a layered element presenting the characteristics set forth in claim 1.

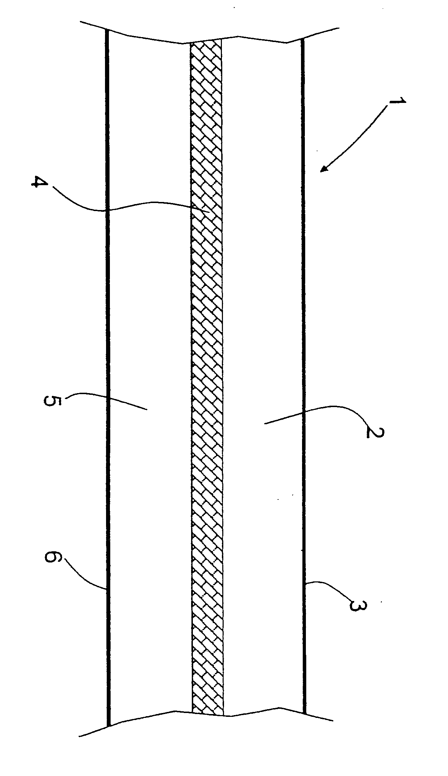

Further characteristics and advantages will become evident from the following description provided as non-restrictive example only. The description is made with reference to the appended figure showing schematically a sectioned embodiment of the layered element of the invention.

With reference to the figure, reference number 1 indicates the overall layered stiffening element according to the invention. It consists of a first layer of self-stick thermosetting resin 2 made by means of hot extrusion on a silicone paper 3 in order to prevent it from sticking to the machine and to make handling possible. On this first layer of resin is placed a layer of carbon fabric 4 coming, for example, from a roll placed over the extruder transporting the resin layer. In view of different requirements and application, and in order to lower costs, the fabric can also be made of fiber glass. On the carbon fabric 4 a second layer of thermosetting resin 5 is placed, this layer being hot extruded and having one side protected by non-sticking silicone paper 6. The three layers are definitely and safely coupled by making the layered element pass through a pair of superimposed rolls which also determine its thickness. In case of special applications or in order to get magnetic adhesion, adequate amounts of magnetic ferrite powder can be added to the thermosetting resin of the two layers 2 and 5.

According to the invention, the layered element thus obtained is placed and fixed on the part of the body-work, or on the mobile parts that are to be stiffened, by means of a procedure consisting of pre-shaping of the layered element to be applied and subsequent manual application of the layered element already preshaped on the part to be reinforced, upon removal of the non-sticking paper. Said stages come before the known ones of painting the body-work of the motor-vehicle and/or its mobile parts, including also the stage of cataphoresis baking at a temperature of 160 °C approximately during which the resin of the layered element stiffens completely so that it is definitely fixed to the part on which it has been applied.

## Claims

1. Layered stiffening element for body-works or mobile parts of motor-vehicles, **characterised in that** it consists of a layer of carbon fabric (3) placed between two layers of thermosetting resin (2, 5), the three layers being assembled by means of hot pressing.

2. Layered stiffening element as claimed in claim 1, **characterised in that** between the two layers of resin (2, 5) instead of the layer of carbon fabric there is a layer of fiber glass.

3. Layered stiffening element as claimed in claim 1 **characterised in that** the resin is mixed with ferrite powder.

4. Layered stiffening element as claimed in claim 1 **characterised in that** on the layers of resin (2, 5) there are sheets of silicone paper.

5. Method to apply a layered stiffening element as claimed in claim 1 on the body-work or on the mobile parts of motor vehicles, the method being **characterised in that** it includes a stage of pre-shaping of the layered element and a following stage in which the element is manually applied on the metal sheet, before the normal cycle of painting.
